# EUROPÄISCHE PATENTSCHRIFT

(11) **EP 0 250 846 B1**
(45) Veröffentlichungstag und Bekanntmachung des Hinweises auf die Patenterteilung: **03.08.1994**
(21) Anmeldenummer: 87107469.6
(22) Anmeldetag: 22.05.1987
(51) Int. Cl.: H01M 2/16, H01M 2/18

(54) **Bahnmaterial und daraus hergestellte Separatorentaschen für die Elektrodenplatten von Akkumulatoren**
Sheet material and separator envelopes made therefrom for accumulator electrode plates
Matériau en feuille et son application à la fabrication de séparateurs de type "enveloppe" pour les plaques d'accumulateur

(30) Priorität: 02.07.1986 DE 3622492
(43) Veröffentlichungstag der Anmeldung: 07.01.1988
(73) Patentinhaber: HAGEN Batterie AG, D-59494 Soest (DE)
(72) Erfinder: Böhle, Christian Dr., D-4770 Soest (DE); Nann, Eberhard Dr., D-4770 Soest-Deiringsen (DE)
(74) Vertreter: Lange, Gerd, Dipl.-Ing.

(56) Entgegenhaltungen:
- DE-C- 592 140
- DE-C- 3 335 547
- GB-A- 2 098 129
- US-A- 2 934 585
- US-A- 3 892 620
- US-A- 3 989 579
- US-A- 4 368 243
- US-A- 4 552 823
- PATENT ABSTRACTS OF JAPAN, Band 6, No. 189 (E-133)[1067], 28. September 1982;& JP-A-57 103 262 (MATSUSHITA DENKI SANGYO K.K.) 26-06-1982
- PATENT ABSTRACTS OF JAPAN, Band 7, Nr. 13 (E-153)[1158], 19. Januar 1983;& JP-A-57 172 656 (FURUKAWA DENCHI K.K.) 23-10-1982
- PATENT ABSTRACTS OF JAPAN, Band 9, Nr. 270 (E-353)[1993], 26. October 1985; & JP-A-60 115 152 (MATSUSHITA DENKI SANGYO K.K.) 21-06-1985

## Beschreibung

Die Erfindung betrifft einen Bleiakkumulator, dessen positive Elektrodenplatten in nach oben offene Separatorentaschen eingetascht sind, die aus einem Bahnmaterial gebildet sind, das um die untere Kante der Elektrodenplatten herumgelegt ist und an den sodann aufeinanderliegenden Seitenrändern der Bahn miteinander verschweißt ist, wobei die Separatorentaschen eine Innenbreite besitzen, die der Breite der positiven Platten entspricht und die auf ihrer Innenfläche mit Abstandsanordnungen in Form von Rippen, Vliesauflagen o. dergl. versehen sind und verstärkte Randzonen aufweisen, die an den beiden äußeren Rändern der Separatorentaschen verlaufen und deren Dicke in Richtung der positiven Platten weisend so verstärkt ist, daß sie in etwa der halben Dicke der positiven Platten zuzüglich der Höhe der Abstandsanordnungen entsprechen.

Separatorentaschen mit verstärkten Randzonen sind in der US-PS 3 989 579 sowie in der US-PS 3 892 620 dargestellt.

Es ist bekannt, Separatorentaschen aus einer porösen, säurebeständigen Kunststoffolie auf der Basis von PVC oder Polyethylen zu fertigen. Solche Materialien sind z.B. in der DE-OS 32 15 659 beschrieben oder können von der Firma W.R.Grace & Co., Massachusettes, USA, unter der Markenbezeichnung DARAMIC bezogen werden. Auch ist es bekannt, im Bereich der Innenfläche der Separatorentaschen auf das sogenannte Grundblatt Abstandsanordnungen aufzubringen oder an das Grundblatt mit anzuformen, die gegen die positive Elektrodenplatte gerichtet sind und das Grundblatt auf Abstand zu der positiven Elektrodenplatte halten. Solche Abstandsanordnungen sind z.B. Vorsprünge oder Rippen und aus der DE-OS 32 07 281 oder der DE-OS 32 15 659 bekannt. Als Abstandsanordnungen sind auch Vliesauflagen bekannt, wie dies das DE-PS 33 35 547 beschreibt. Auch ist es bekannt, die Abstandsanordnungen als Verformungen des Grundblattes herzustellen, wie dies das US-PS 4 003 758 zeigt.

Bei allen Separatorentaschen, unabhängig davon, ob mit oder ohne Abstandsanordnungen, muß das Grundblatt relativ dünn und porös ausgeführt sein, um eine hohe Diffusionsfähigkeit der Separatorentaschen zu erreichen. Dementsprechend besitzt das Grundblatt der bekannten Separatorentaschen eine Dicke von z.B. nur 0,20 bis 0,25 mm. Sind auf das Grundblatt die vorgenannten Abstandsanordnungen aufgebracht oder angeformt, dann erhöht sich die Gesamtdicke auf z.B. 1,0 bis 1,5 mm.

Durch das Eintaschen der positiven Elektrodenplatten eines Bleiakkumulators in Separatorentaschen sollen Kurzschlüsse verhindert werden, die durch Berührungskontakte der positiven und negativen Platten oder durch ausgefallene oder abgeschlammte aktive Massen entstehen können. Das Eintaschen der Elektrodenplatten erfolgt möglichst hauteng, da bei gegebenen Zellenabmessungen der Batterie die Elektrodenplatten möglichst groß gewählt werden, um eine hohe Leistung der Batterie zu erreichen. Es tritt dann jedoch das Problem auf, daß während der Gebrauchsdauer der Batterie die positiven Gitter der Elektrodenplatten infolge von Korrosionsvorgängen wachsen, d.h. größer werden, wodurch die Separatorentaschen bei einer hautengen Anpassung im Bereich ihrer Seitenränder aufreißen können oder insbesondere bei scharfen Rändern eines Gitters z.B. aus Streckmetall durchstoßen werden. Der frühzeitige Ausfall der Batterie ist die Folge.

Um das vorgenannte Problem etwas zu mindern, wird üblicherweise bei der Bemessung der Gesamtbreite der Separatorentaschen zwischen den Randzonen und der mit der Anlagefläche der Elektrodenplatten deckungsgleichen Innenbreite eine Übergangszone von wenigen Millimetern vorgesehen, die zum einen bei der Herstellung der Separatorentaschen für eine bessere Ausführbarkeit der Versiegelungs- oder Schweißnaht genutzt wird und zum anderen in gewissen Grenzen ein Wachstum der positiven Gitter der eingetaschten Elektrodenplatten zuläßt.

Diese Übergangszonen sind jedoch nicht beliebig und nicht zufriedenstellend zu vergrößern, da andernfalls bei gegebenen Zellenabmessungen die Elektrodenplatten und damit die Leistung der Batterie kleiner werden würden.

Aufgabe der Erfindung ist es, einen Bleiakkumulator mit in Separatorentaschen eingetaschten positiven Elektrodenplatten vorzuschlagen, der bei größtmöglichsten Abmessungen der Elektrodenplatten in einem gegebenen Zellengefäß dennoch eine gute Ausführbarkeit der Versiegelungs- oder Schweißnähte der Separatorentaschen und eine große Sicherheit gegen Aufreißen oder Durchstoßen der Separatorentaschen infolge des Wachsens der Gitter der positiven Elektrodenplatten gewährleistet.

Diese Aufgabe wird dadurch gelöst, daß zwischen der Innenbreite und den verstärkten Randzonen der Separatorentaschen jeweils eine Übergangszone mit einer zunehmenden Dicke des Bahnmaterials vorhanden ist, die ausgehend von der Innenbreite bis auf die Dicke der verstärkten Randzonen stetig ansteigt, und daß das Bahnmaterial zumindest in den Übergangszonen dehnbar ist.

Die Materialanhäufung im Bereich der Übergangszonen hat den Vorteil, daß bei einem größeren Wachstum der positiven Gitter der Elektrodenplatten das Material einerseits weder von scharfen Gitterkanten durchstoßen werden kann und andererseits stärker gedehnt werden kann als ein Material mit nur geringer Grundblattdicke, bei dem schon bei relativ kleinen Dehnungen ein Dehnungsriß erfolgt. Dieser Vorteil ist insbesondere für PVC-Separatorentaschen von Bedeutung, da PVC eine geringere spezifische Dehnbarkeit besitzt als z.B. Polyethylen-Separatorentaschen.

Nachfolgend werden Ausführungsbeispiele der Erfindung anhand der Zeichnungen näher beschrieben.
Es zeigen:
- Fig. 1: in perspektivischer Darstellung eine erfindungsgemäße Separatorentasche,
- Fig. 2 - 4: Querschnitte in Höhe der Linie V-V in Fig. 1 durch verschiedene Ausführungsformen der Erfindung.

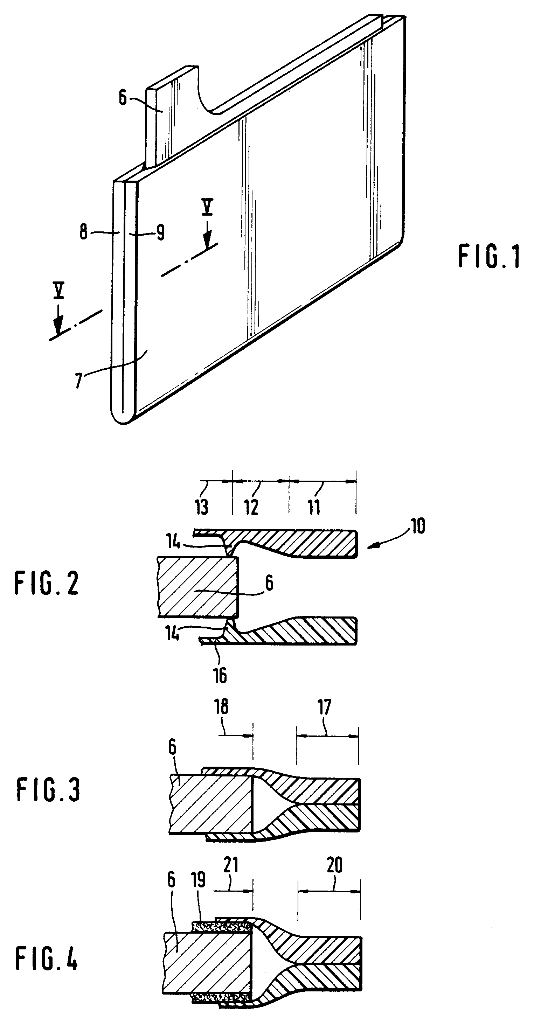

Fig. 1 zeigt eine Elektrodenplatte 6 bekannter Bauart, die in eine erfindungsgemäße Separatorentasche 7 eingetascht ist. Die Separatorentasche besteht aus zwei Lagen 8 und 9 eines Bahnmaterials, das um die untere Kante der Elektrodenplatte 6 herumgelegt und sodann an seinen aneinanderliegenden Randzonen heißversiegelt oder verschweißt worden ist.

Fig. 2 zeigt einen Querschnitt entlang der Linie V-V in Fig. 1 durch die schematisch dargestellte Elektrodenplatte 6 und ein Bahnmaterial 10, dessen Randzonen 11 zunächst noch nicht miteinander heißversiegelt oder verschweißt sind, wie dies zur Fertigstellung der Separatorentasche nötig wäre.

Verdeutlicht sind in Fig. 2 eine Randzone 11, eine Übergangszone 12 und die Innenfläche 13 des Bahnmaterials 10. Die Übergangszone 12 erstreckt sich von der Randzone 11 bis hin zu der ersten außenliegenden Abstandsrippe 14 des Bahnmaterials, die zugleich die Anlagefläche der Elektrodenplatte 6 begrenzt und an der die mit der Anlagefläche der Elektrodenplatte deckungsgleiche Innenfläche 13 des Bahnmaterials beginnt.

Im Bereich der Übergangszone 12 steigt die Dicke des Bahnmaterials ausgehend von der Innenfläche 13 bis zur Randzone 11 stetig an.

Die Fig. 3 und 4 zeigen einen vergleichbaren Querschnitt durch bereits fertiggestellte Separatorentaschen, bei denen die Randzonen des Bahnmaterials bereits miteinander heißversiegelt oder verschweißt worden sind.

Fig. 3 verdeutlicht die einfachste Form einer Separatorentasche, die ohne Abstandsanordnungen gefertigt ist und bei der erkennbar die Dicke des Bahnmaterials ausgehend von der Innenbreite 18 bis auf die Dicke der verstärkten Randzone 17 stetig ansteigt.

Fig. 4 zeigt eine Separatorentasche, die als Abstandsanordnung eine Vliesauflage 19 aufweist, die die Anlagefläche der Elektrodenplatte 6 vollständig abdeckt. Auch hier wieder steigt die Dicke des Bahnmaterials ausgehend von der Innenbreite 21 der Separatorentasche bis auf die Dicke der Randzonen 20 stetig an.

## Patentansprüche

1. Bleiakkumulator,
- dessen positive Elektrodenplatten in nach oben offene Separatorentaschen eingetascht sind,
- die aus einem Bahnmaterial gebildet sind, das um die untere Kante der Elektrodenplatten herumgelegt ist und an den sodann aufeinanderliegenden Seitenrändern der Bahn miteinander verschweißt ist,
- wobei die Separatorentaschen eine Innenbreite besitzen, die der Breite der positiven Platten entspricht und die auf ihrer Innenfläche mit Abstandsanordnungen in Form von Rippen, Vliesauflagen o. dergl. versehen sind,
- und verstärkte Randzonen aufweisen, die an den beiden äußeren Rändern der Separatorentaschen verlaufen und deren Dicke in Richtung der positiven Platten weisend so verstärkt ist, daß sie in etwa der halben Dicke der positiven Platten zuzüglich der Höhe der Abstandsanordnungen entsprechen,
dadurch gekennzeichnet,
- daß zwischen der Innenbreite (13,21) und den verstärkten Randzonen (11,20) der Separatorentaschen jeweils eine Übergangszone (12) mit einer zunehmenden Dicke des Bahnmaterials vorhanden ist, die ausgehend von der Innenbreite bis auf die Dicke der verstärkten Randzonen stetig ansteigt
- und daß das Bahnmaterial zumindest in den Übergangszonen dehnbar ist.

## Claims

1. Lead accumulator,
- the positive electrode plates of which are stored in upwardly open separator pockets,
- which separator pockets are formed from a web material which is placed around the lower edge of the electrode plates and welded together at the immediately adjacent lateral edges of the web,
- the separator pockets having an internal width, which corresponds to the width of the positive plates, and being provided, on their internal surface, with spacer arrangements in the form of ribs, non-woven fabric supports or the like,
- and said pockets have reinforced edge zones which extend along the two outer edges of the separator pockets and have a thickness which is so reinforced in the direction of the positive plates that they correspond substantially to half the thickness of the positive plates plus the height of the spacer arrangements,
characterised
- in that a respective transitional zone (12) is provided with an increasing thickness of the web material between the internal width (13, 21) and the reinforced edge zones (11, 20) of the separator pockets and constantly increases from the internal width to the thickness of the reinforced edge zones,
- and in that the web material is extensible, at least in the transitional zones.

## Revendications

1. Accumulateur au plomb,
- dont les plaques d'électrodes positives sont ensachées dans des poches de séparateurs ouvertes vers le haut,
- qui est réalisé à partir d'un matériau en bandes, qui est disposé autour de l'arête inférieure des plaques d'électrodes, et auquel sont soudées les arêtes latérales superposées de la bande disposée en recouvrement,
- dans lequel les poches des séparateurs présentent une largeur intérieure correspondant à la largeur des plaques positives et sont munies en leur surface intérieure d'agencements d'espacements sous la forme de nervures, de dépôts de non-tissé, ou similaires,
- et dans lequel les poches comportent des zones de bordure renforcées qui s'étendent sur les deux bords extérieurs des poches de séparation, et dont l'épaisseur, dans la direction des plaques positives, est effectivement renforcée de façon à correspondre à environ la moitié de l'épaisseur des plaques positives y compris la hauteur des agencements d'écartement,
caractérisé en ce que
- entre la largeur intérieure (13, 21) et les zones renforcées (11, 20) des poches de séparations, est prévue chaque fois une zone de transition (12) présentant une épaisseur croissante du matériau en bandes, qui, à partir de la largeur intérieure, augmente continuellement jusqu'à l'épaisseur des zones de bordures renforcées,
- et en ce que le matériau en bandes est extensible au moins dans les zones de transition.
